# EUROPEAN PATENT APPLICATION

(11) **EP 4 383 404 A2**
(43) Date of publication of application: **12.06.2024**
(21) Application number: 23213913.9
(22) Date of filing: 04.12.2023
(51) Int. Cl.: H01M 10/48, H01M 10/42, H01M 10/6235, H01M 50/211, H01M 50/247, H01M 50/569

(54) **BATTERY PACK**

(30) Priority: 06.12.2022 US 202263430585 P
(71) Applicant: Milwaukee Electric Tool Corporation, Brookfield, WI 53005 (US)
(72) Inventor: MEYER, Zachery, Hartland 53029 (US); SILHA, Wyatt R., Milwaukee 53210 (US); SCHMELING, Thomas A., Wauwatosa 53222 (US); ZIDEL, Eli M., Milwaukee 53211 (US); QUENZER, Jonathan, German Valley 61039 (US); SCHENK, Alexander R., Elkhorn 53121 (US); FASSBENDER, Kyle C., Brookfield 53005 (US); BORK, Kevin W., Germantown 53022 (US)
(74) Representative: Forresters IP LLP

(57) **Abstract**

A battery pack is disclosed and includes a battery housing, a core housing disposed within the battery housing, at least one pouch cell disposed within the core housing, a flexible circuit extending along an inner surface of the core housing, and a temperature sensor operably coupled to the flexible circuit.

## Description

### CROSS-REFERENCE TO RELATED APPLICATIONS

The present application claims priority to U.S. provisional application number 63/430,585, filed December 6, 2022, the entire contents of which are incorporated by reference herein.

### FIELD OF THE DISCLOSURE

The present disclosure relates to cordless power tools, and more particularly to batteries for cordless power tools.

### BACKGROUND OF THE DISCLOSURE

From do-it-yourself projects at home to large scale commercial construction projects, cordless power tools are ubiquitous. These tools have increased productivity and efficiency. These tools require battery packs that are constantly improving.

### SUMMARY OF THE DISCLOSURE

The present disclosure provides, in one aspect, a battery pack that includes a battery housing, a core housing disposed within the battery housing, at least one pouch cell disposed within the core housing, a flexible circuit extending along an inner surface of the core housing, and a temperature sensor operably coupled to the flexible circuit.

The present disclosure provides, in another aspect, a battery pack that includes a battery housing, a core housing disposed within the battery housing, at least one pouch cell disposed within the core housing, a flexible circuit extending along an outer surface of the core housing, a temperature sensor operably coupled to the flexible circuit, and a copper trace operable coupled to the temperature sensor and extending into the core housing.

The present disclosure provides, in another aspect, a battery pack that includes a battery housing having an upper battery housing portion and a lower battery housing portion, a core housing disposed within the battery housing, at least one pouch cell disposed within the core housing, and wherein the core housing is made from a thermally conductive material.

The present disclosure provides, in another aspect, a battery pack comprising:
a battery housing;
a core housing disposed within the battery housing;
at least one pouch cell disposed within the core housing;
a flexible circuit extending along an inner surface of the core housing; and
a temperature sensor operably coupled to the flexible circuit.

The temperature sensor may comprises a thermistor.

The thermistor may be a negative temperature coefficient thermistor.

The core housing may further comprise an opening aligned with the temperature sensor.

The battery pack may further compris a foam block disposed in the opening of the core housing.

The battery housing may comprise one or more ribs aligned with the opening in the core housing.

The ribs may press against the foam block.

The present disclosure provides, in another aspect, a battery pack comprising:
a battery housing;
a core housing disposed within the battery housing;
at least one pouch cell disposed within the core housing;
a flexible circuit extending along an outer surface of the core housing;
a temperature sensor operably coupled to the flexible circuit; and
a copper trace operable coupled to the temperature sensor and extending into the core housing.

The copper trace may extend into a location between two adjacent pouch cells.

The present disclosure provides, in another aspect, a battery pack comprising:
a battery housing having an upper battery housing portion and a lower battery housing portion;
a core housing disposed within the battery housing;
at least one pouch cell disposed within the core housing; and
wherein the core housing is made from a thermally conductive material.

A bottom of the core housing may be a heat sink.

The core housing may include a lower plate and an upper plate connected thereto by a plurality of standoffs.

The core housing may include a plurality of slot pairs.

A plate may be installed in aligned slot pairs.

The pouch cell may be disposed on the plate.

Other features and aspects of the disclosure will become apparent by consideration of the following detailed description and accompanying drawings.

### BRIEF DESCRIPTION OF THE DRAWINGS

FIG. 1 is a perspective view of a battery pack.
FIG. 2 is a top plan view of the battery pack of FIG. 1.
FIG. 3 is a bottom plan view of the battery pack of FIG. 1.
FIG. 4 is a side plan view of the battery pack of FIG. 1.
FIG. 5 is a rear plan view of the battery pack of FIG. 1.
FIG. 6 is a front plan view of the battery pack of FIG. 1.
FIG. 7 is a side plan view of the battery pack of FIG. 1 with a lower battery housing portion removed.
FIG. 8 is a side plan view of the battery pack of FIG. 1 with a lower battery housing portion and a core housing removed.
FIG. 9 is a front perspective view of a core housing of the battery pack of FIG. 1 with the battery housing removed.
FIG. 10 is a partial cross section view of the battery pack of FIG. 1.
FIG. 11 is a partial view of another battery pack.
FIG. 12 is a perspective view of a core housing.
FIG. 13 is a perspective view of another core housing.
FIG. 14 is a plan view of still another core housing.
FIG. 15 is a plan view of yet another core housing.

Before any embodiments of the disclosure are explained in detail, it is to be understood that the disclosure is not limited in its application to the details of construction and the arrangement of components set forth in the following description or illustrated in the following drawings. The disclosure is capable of other embodiments and of being practiced or of being carried out in various ways. Also, it is to be understood that the phraseology and terminology used herein is for the purpose of description and should not be regarded as limiting.

Features illustrated or described as part of one embodiment can be used with another embodiment to yield a still further embodiment. Thus, it is intended that the present disclosure covers such modifications and variations as come within the scope of the appended claims and their equivalents. The detailed description uses numerical and letter designations to refer to features in the drawings. Like or similar designations in the drawings and description have been used to refer to like or similar parts of the disclosure.

As used herein, the terms "first", "second", and "third" may be used interchangeably to distinguish one component from another and are not intended to signify location or importance of the individual components. The singular forms "a," "an," and "the" include plural references unless the context clearly dictates otherwise. The terms "coupled," "fixed," "attached to," and the like refer to both direct coupling, fixing, or attaching, as well as indirect coupling, fixing, or attaching through one or more intermediate components or features, unless otherwise specified herein. As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive- or and not to an exclusive- or. For example, a condition A or B is satisfied by any one of the following: A is true (or present) and B is false (or not present), A is false (or not present) and B is true (or present), and both A and B are true (or present).

Terms of approximation, such as "generally," "approximately," or "substantially," include values within ten percent greater or less than the stated value. When used in the context of an angle or direction, such terms include within ten degrees greater or less than the stated angle or direction. For example, "generally vertical" includes directions within ten degrees of vertical in any direction, e.g., clockwise or counter-clockwise.

Benefits, other advantages, and solutions to problems are described below with regard to specific embodiments. However, the benefits, advantages, solutions to problems, and any feature(s) that may cause any benefit, advantage, or solution to occur or become more pronounced are not to be construed as a critical, required, or essential feature of any or all the claims.

### DETAILED DESCRIPTION

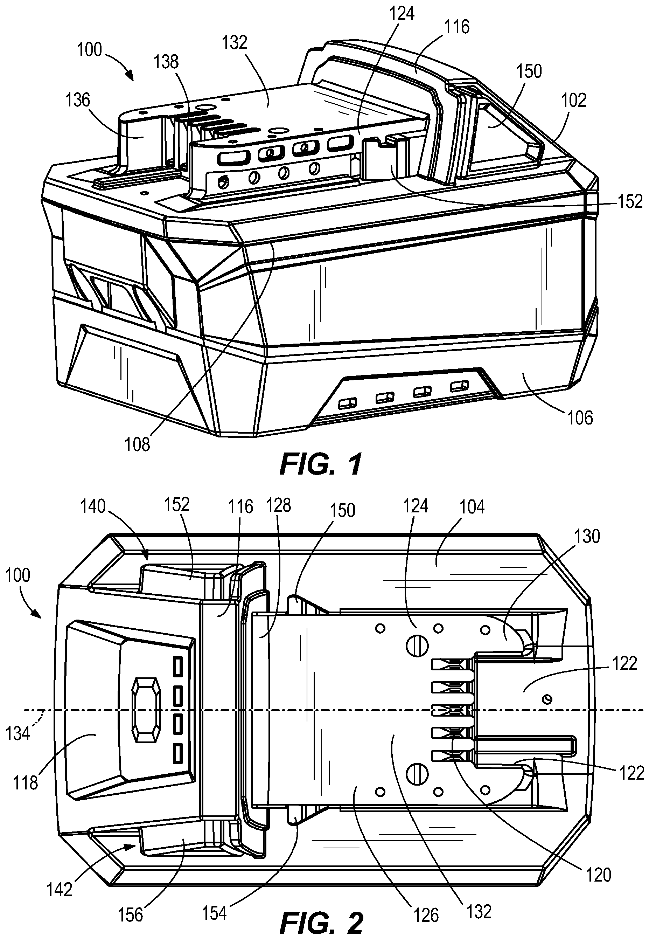

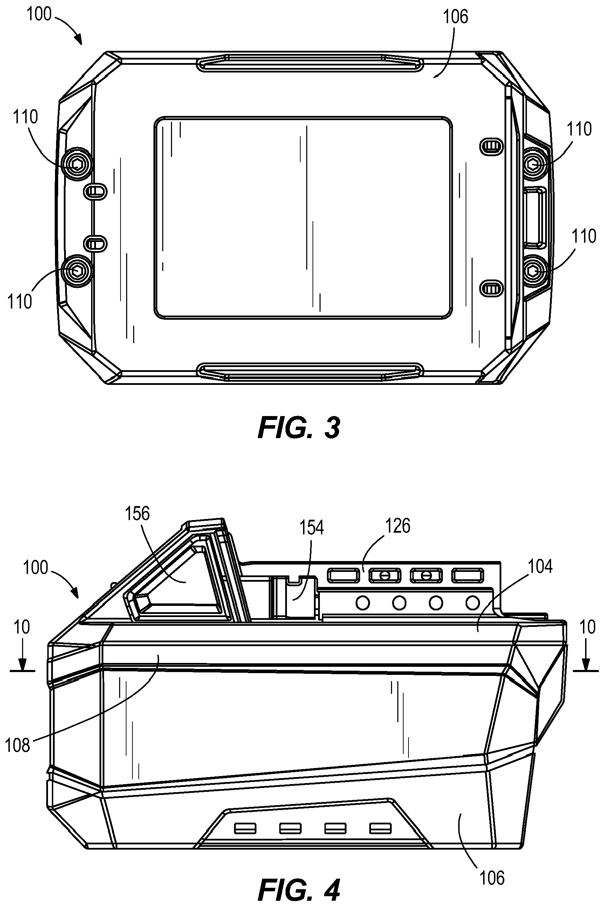

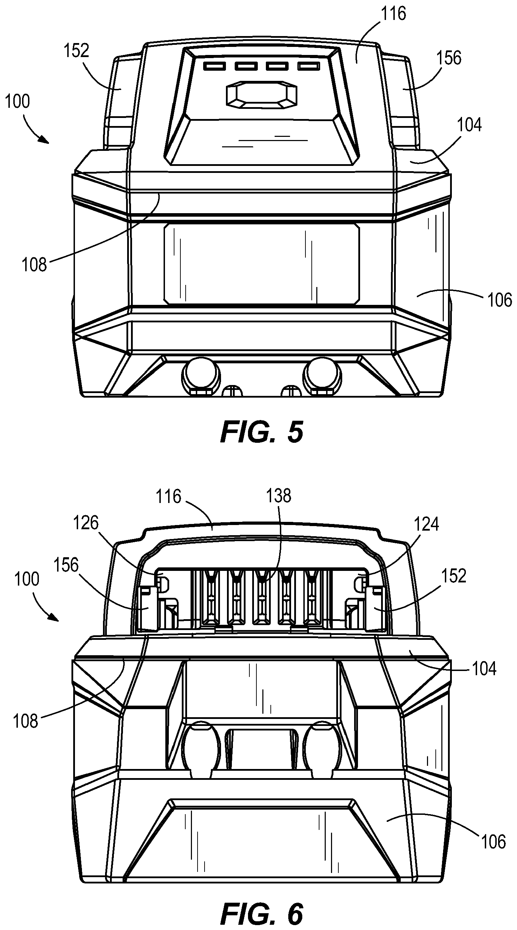

Referring to FIGS. 1 - 6, a battery pack 100 is illustrated. As shown, the battery pack 100 includes a battery housing 102 having an upper battery housing portion 104 coupled to a lower battery housing portion 106 along a seam 108, or interface, via a plurality of threaded fasteners 110 (e.g., screws). The upper battery housing portion 104 includes an upper surface 112 and a tool body engagement assembly 114 that extends therefrom. The tool body engagement assembly 114 includes a latch assembly housing 116 disposed on the upper battery housing portion 104 adjacent a first end 118 of the upper battery housing portion 104. A rail assembly 120 extends along the upper surface 112 of the upper battery housing portion 104 from the latch assembly housing 116 adjacent a second end 122 of the upper battery housing portion 104. The rail assembly 120 includes a first rail 124 and a second rail 126 that extend along the length of the rail assembly 120 from a first end 128 of the rail assembly 120 to a second end 130 of the rail assembly 120.

As shown, the rails 124, 126 extend outward from a central portion 132 of the rail assembly 120 away from a central axis 134 of the battery pack 100 such that the rails 124, 126 are parallel to the central axis 134. Each rail 124, 126 is generally shaped like an inverted "L" and is sized and shaped to fit into a complementary shaped feature on a battery receptacle of a cordless power tool. The tool body engagement assembly 114 further includes a recess 136 that extends into the second end 130 of the rail assembly 120 and terminates at a plurality of terminal openings 138. When the battery pack 100 is engaged with a battery receptacle on a cordless power tool, the terminal openings 138 will fit around one or more terminals within the cordless power tool and battery terminals within the terminal openings 138 will be operably coupled to each other to transmit direct current (DC) power from the battery pack 100 to the cordless power tool to provide DC power to a motor and other electrical components within the cordless power tool.

The tool body engagement assembly 114 also includes a first latch 140 and a second latch 142 disposed in the latch assembly housing 116 and partially extending into the first end 128 of the rail assembly 120. The first latch 140 includes a hook 150 and a release button 152. The second latch 142 also includes a hook 154 and a release button 156. The first latch 140 and the second latch 142 are biased outward relative to the central axis 134 via one or more springs. During use, when the battery pack 100 is engaged with a battery receptacle of a cordless power tool, the hooks 150, 154 engage complementary features of the battery receptable to retain the battery pack 100 in engagement with the cordless tool. When the release buttons 152, 156 are pressed by a user, the hooks 150, 154 are retracted and the battery pack 100 may be removed from the cordless power tool by sliding the battery pack 100 from the battery receptacle.

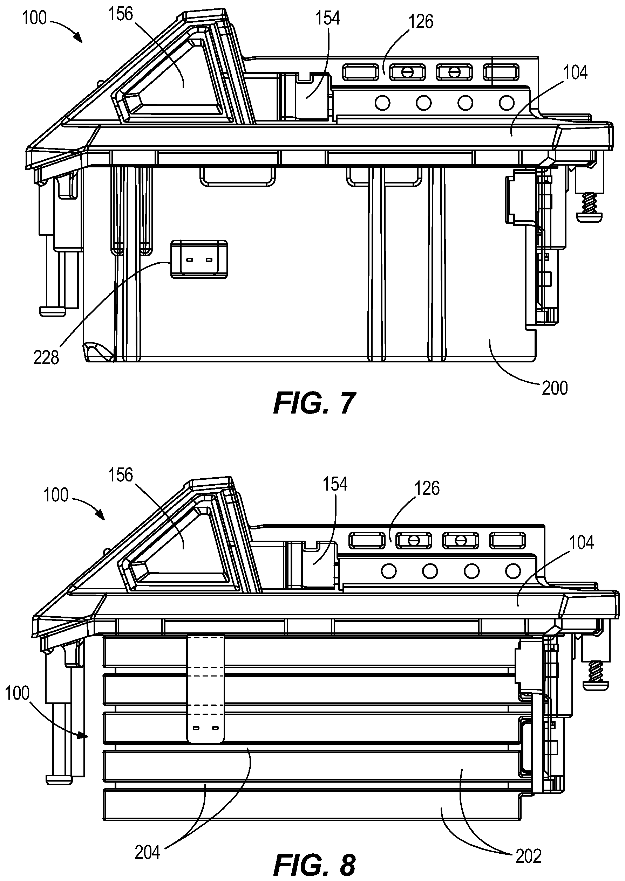

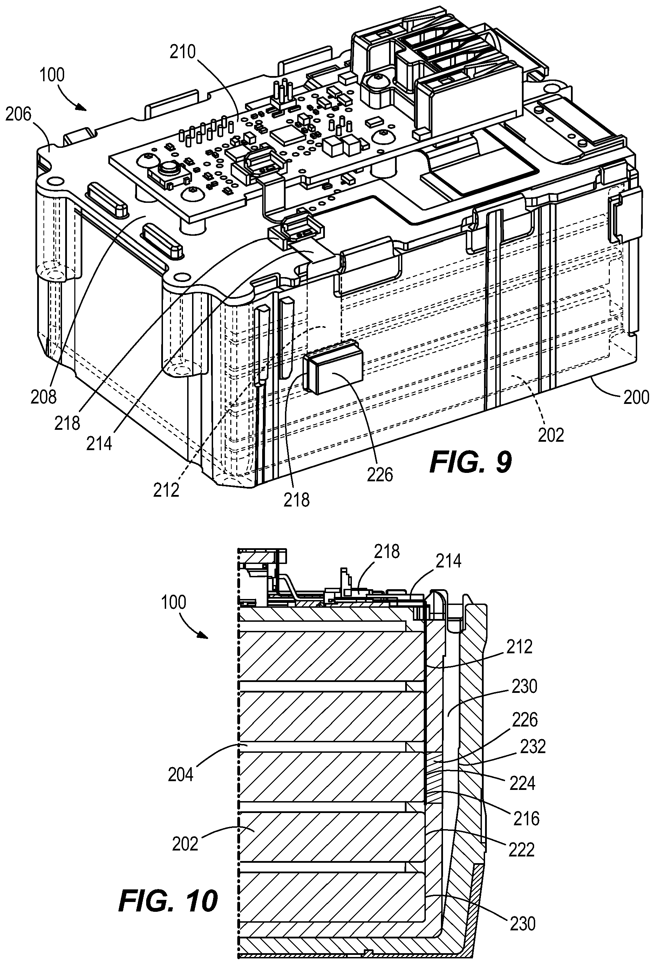

Referring to FIG. 7, the battery pack 100 includes a core housing 200 disposed within the battery housing 102. Further, as FIG. 8 shows, a plurality of pouch cells 202 are disposed within the core housing 200. The pouch cells 202 are electrically coupled to each other. Adjacent pouch cells 202 are separated by a plate 204, or spacer. As shown in FIG. 9, the battery pack 100 further includes a printed circuit board assembly (PCBA) 206 disposed on the top of the core housing 200. The PCBA 206 includes a lower PCB 208 and an upper PCB 210 disposed thereon.

As shown, the battery pack 100 includes a flexible circuit 212 having a proximal end 214 and a distal end 216. The proximal end 214 of the flexible circuit 212 is electrically and operably coupled to a connector 218 and the flexible circuit 212 extends from the connector 218 down along an inner wall 220 of the core housing 200. In extending along the inner wall 220 of the core housing 200, the flexible circuit 212 also extends along an outer surface 222 of each of the plurality of pouch cells 202. FIG. 10 further indicates that the battery pack 100 includes a temperature sensor 224 electrically and operably coupled to a distal end of the flexible circuit 212. For example, the temperature sensor 224 is a thermistor. In one embodiment, the thermistor is a negative temperature coefficient (NTC) thermistor in which the electrical resistance decreases as the temperature increases. In another embodiment, the thermistor is a positive temperature coefficient (PTC) thermistor in which the electrical resistance increase as the temperature increases.

As further illustrated in FIG. 10, a foam backing block 226 extends through an opening 228 in sidewall of the core housing 200 and is aligned with the temperature sensor 224. The foam backing block 226 presses against the temperature sensor 224 to keep it aligned and engaged with the outer surface 222 of the pouch cell 202. The lower housing portion 106 includes one or more ribs 230 extending inwardly from an inner surface 232 of the lower housing portion 106. The ribs 230 are aligned with the opening 228 in the sidewall of the core housing 200. When the core housing 200 is installed in the lower battery housing portion 106, the ribs 230 press against the foam backing block 226 to compress the foam backing block 226 against the temperature sensor 224 to help maintain the temperature 224 in place against the outer surface 222 of the pouch cell 202.

The temperature sensor 224 allows the temperature of the stack of pouch cells 202 to be accurately. Moreover, the arrangement disclosed herein is relatively easy to assemble in the battery pack 100 and relatively durable. The ribs 230 can be sloped, or angled, to facilitate assembly. The thermistor 224 and the flexible circuit 212 are within the core housing 200 and do not slide against the lower battery housing portion 106 during assembly.

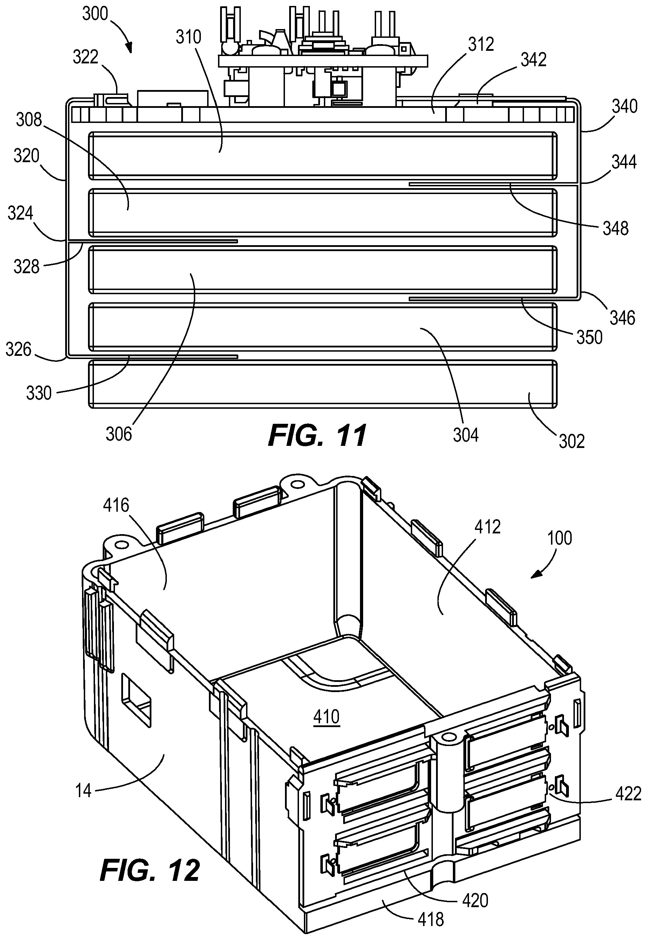

In another aspect, as shown in FIG. 11, a battery pack 300 includes a first pouch cell 302, a second pouch cell 304, a third pouch cell 306, a fourth pouch cell 308, and a fifth pouch cell 310 arranged in a stack. A PCBA 312 is disposed above the pouch cells 302, 304, 306, 308, 310. A first flexible circuit 320 extends from a first connector 322 down along an exterior surface of the pouch cells 302, 304, 306, 308, 310. In a particular aspect, the first flexible circuit 320 is located outside of a core housing in which the pouch cells 302, 304, 306, 308, 310 are disposed and inside of a lower battery housing portion, i.e., between an outer surface of the core housing and an inner surface of a lower battery housing portion in which the core housing is disposed.

As shown, the first flexible circuit 320 includes a first temperature sensor 324 and a second temperature sensor 326 that are located outside of the core housing and inside of the lower battery housing portion i.e., between an outer surface of the core housing and an inner surface of a lower battery housing portion in which the core housing is disposed. The temperature sensors 324, 326 are electrically and operably connected to the first flexible circuit 320. The temperature sensors 324, 326 are thermistors, for example. In one embodiment, the thermistors are negative temperature coefficient (NTC) thermistors in which the electrical resistance decreases as the temperature increases. In another embodiment, the thermistors are positive temperature coefficient (PTC) thermistors in which the electrical resistance increase as the temperature increases.

FIG. 11 shows that a first flexible circuit copper trace 328 is electrically and operably coupled to the first temperature sensor 324 and extends from the first temperature sensor 324 into a location within the core housing between the third and fourth pouch cells 306, 308. A second flexible circuit copper trace 330 is electrically and operably coupled to the second temperature sensor 326 and extends from the second temperature sensor 326 into a location within the core housing between the first and second pouch cells 302, 304.

As further illustrated, a second flexible circuit 340 extends from a second connector 342 down along an exterior surface of the pouch cells 302, 304, 306, 308, 310. In a particular aspect, the second flexible circuit 340 is located outside of a core housing in which the pouch cells 302, 304, 306, 308, 310 are disposed and inside of a lower battery housing portion, i.e., between an outer surface of the core housing and an inner surface of a lower battery housing portion in which the core housing is disposed.

As shown, the second flexible circuit 320 includes a third temperature sensor 344 and a fourth temperature sensor 346 that are located outside of the core housing and inside of the lower battery housing portion i.e., between an outer surface of the core housing and an inner surface of a lower battery housing portion in which the core housing is disposed. The temperature sensors 344, 346 are electrically and operably connected to the second flexible circuit 340. The temperature sensors 344, 346 are thermistors, for example. In one embodiment, the thermistors are negative temperature coefficient (NTC) thermistors in which the electrical resistance decreases as the temperature increases. In another embodiment, the thermistors are positive temperature coefficient (PTC) thermistors in which the electrical resistance increase as the temperature increases.

FIG. 11 shows that a third flexible circuit copper trace 348 is electrically and operably coupled to the third temperature sensor 344 and extends from the third temperature sensor 344 into a location within the core housing between the fourth and fifth pouch cells 308, 310. A fourth flexible circuit copper trace 350 is electrically and operably coupled to the fourth temperature sensor 346 and extends from the fourth temperature sensor 346 into a location within the core housing between the second and third pouch cells 304, 306. With this arrangement, the copper traces 328, 330, 348, 350 are able to transmit heat from with the pouch cells 302, 304, 306, 308, 310 to the temperature sensors 324, 326, 344, 346 to provide very accurate temperature data for the stack of pouch cells 302, 304, 306, 308, 310.

FIG. 12 illustrates another embodiment of a core housing 400 that includes a base plate 410. A first sidewall 412 and a second side wall 414 extend perpendicularly from the base plate 410. The sidewalls 412, 414 are parallel to each other. A rear wall 416 extends perpendicularly from the base plate 410 between the sidewalls 412, 414. The rear wall 416 extends along the entire height of the sidewalls 412, 414 and is perpendicular to the sidewalls 412, 414. A front wall 418 also extends perpendicularly from the base plate 410 opposite the rear wall 418. The front wall 418 is parallel to the rear wall 416. Moreover, the front wall 418 only extends along a portion of the height of the sidewalls 412, 414 such that an opening 420 is formed in the front wall 418 between the sidewalls 412, 414. A front endplate 422 is disposed within the opening 420 in the front wall 418. The core housing 4002 is formed from a thermally conductive plastic material and may have one or more metal features insert molded therein. These features can include one or more heat sinks, one or more metal fins, or a combination thereof. Further, the core housing 402 can be molded with one or more voids, or openings, formed in the based plate 410, the sidewalls 412, 414, or the rear wall 416 to provide ventilation and air flow to carry heat away from one or more pouch cells disposed therein.

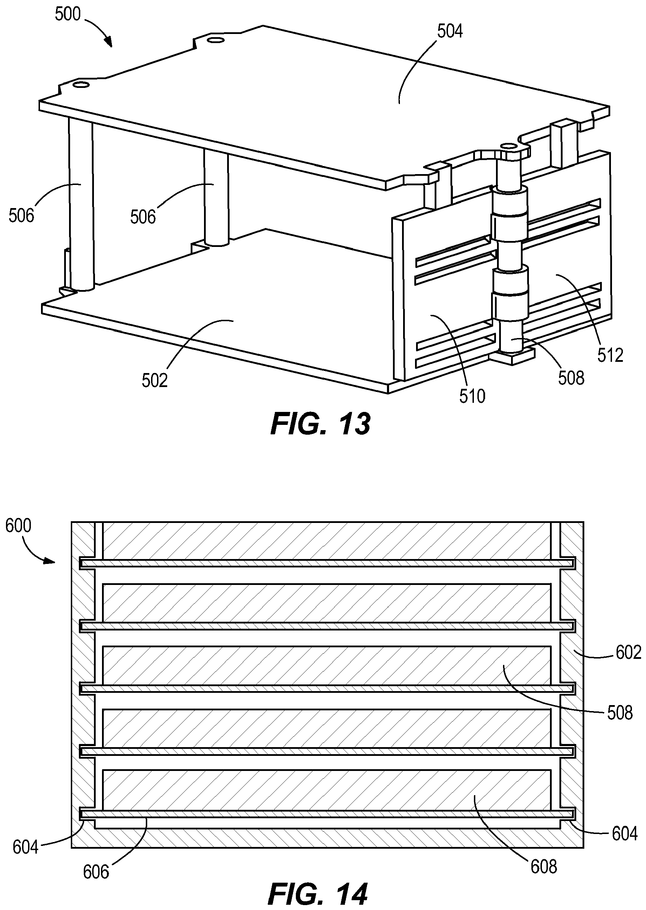

FIG. 13 illustrates another core housing 500 that includes a lower plate 502 and an upper plate 504 coupled thereto via two rear standoffs 506 and a front standoff 508. The standoffs 506, 508 can be cylindrical posts, plates, square posts, or a combination thereof. Further, the standoffs 506, 508 may be made from aluminum. As shown, one or more doors 510, 512 are mounted on the front standoff 508. This arrangement provides a relatively strong structure for fragile pouch cells. This arrangement also minimizes size and weight. The doors 510, 512 swing in and out for assembly. Further, the doors 510, 512 may be plastic to isolate the front standoff 508 from a pair of pouch cell tabs to prevent shorting.

FIG. 14 illustrates yet another core housing 600 that include an outer housing 602 formed with a plurality of slot pairs 604 arranged horizontally along the same plane. A plate 606 with a pouch cell 608 attached thereto is slid into each slot pair 604. This arrangement provides for substantial clearance for pouch expansion and minimizes core stack up tolerance for the total height. In another aspect, the slot pairs 604 can be arranged vertically.

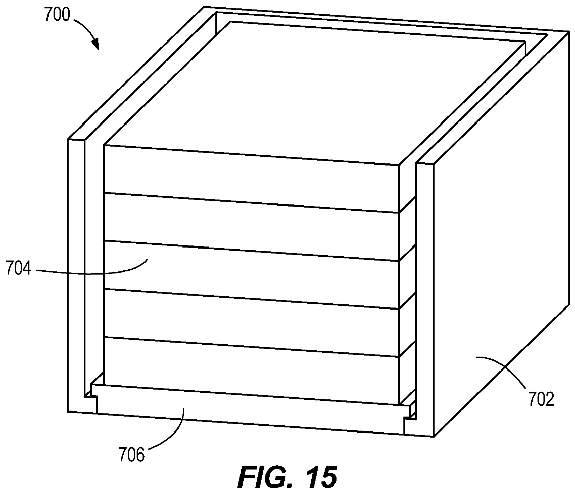

FIG. 15 depicts another core housing 700 having an outer housing 702 with a plurality of pouch cells 704 disposed therein. The bottom 706 of the housing 702 is a heat sink that is made from aluminum or another material with a high thermal conductivity. The core housing 700 could also include one or more thermally conductive inserts along the sides of the pouch cells 704.

Although the disclosure has been described in detail with reference to certain preferred embodiments, variations and modifications exist within the scope and spirit of one or more independent aspects of the disclosure as described. When used in this specification and claims, the terms "comprises" and "comprising" and variations thereof mean that the specified features, steps or integers are included. The terms are not to be interpreted to exclude the presence of other features, steps or components.

### REPRESENTATIVE FEATURES

Representative features are set out in the following clauses, which stand alone or may be combined, in any combination, with one or more features disclosed in the text and/or drawings of the specification.
1. A battery pack comprising:
   a battery housing;
   a core housing disposed within the battery housing;
   at least one pouch cell disposed within the core housing;
   a flexible circuit extending along an inner surface of the core housing; and
   a temperature sensor operably coupled to the flexible circuit.
2. The battery pack of clause 1, wherein the temperature sensor comprises a thermistor.
3. The battery pack of clause 2, wherein the thermistor is a negative temperature coefficient thermistor.
4. The battery pack of clause 1, wherein the core housing further comprises an opening aligned with the temperature sensor.
5. The battery pack of clause 4, further comprising a foam block disposed in the opening of the core housing.
6. The battery pack of clause 5, wherein the battery housing comprises one or more ribs aligned with the opening in the core housing.
7. The battery pack of clause 6, wherein the ribs press against the foam block.
8. A battery pack comprising:
   a battery housing;
   a core housing disposed within the battery housing;
   at least one pouch cell disposed within the core housing;
   a flexible circuit extending along an outer surface of the core housing;
   a temperature sensor operably coupled to the flexible circuit; and
   a copper trace operable coupled to the temperature sensor and extending into the core housing.
9. The battery pack of clause 8, wherein the copper trace extends into a location between two adjacent pouch cells.
10. A battery pack comprising:
   a battery housing having an upper battery housing portion and a lower battery housing portion;
   a core housing disposed within the battery housing;
   at least one pouch cell disposed within the core housing; and
   wherein the core housing is made from a thermally conductive material.
11. The battery pack of clause 10, wherein a bottom of the core housing is a heat sink.
12. The battery pack of clause 10, wherein the core housing includes a lower plate and an upper plate connected thereto by a plurality of standoffs.
13. The battery pack of clause 10, wherein the core housing includes a plurality of slot pairs.
14. The battery pack of clause 13, wherein a plate is installed in aligned slot pairs.
15. The battery pack of clause 14, wherein the pouch cell is disposed on the plate.

## Claims

1. A battery pack comprising:
a battery housing;
a core housing disposed within the battery housing;
at least one pouch cell disposed within the core housing;
a flexible circuit extending along an inner surface of the core housing; and
a temperature sensor operably coupled to the flexible circuit.

2. The battery pack of claim 1, wherein the temperature sensor comprises a thermistor.

3. The battery pack of claim 2, wherein the thermistor is a negative temperature coefficient thermistor.

4. The battery pack of claim 1, wherein the core housing further comprises an opening aligned with the temperature sensor.

5. The battery pack of claim 4, further comprising a foam block disposed in the opening of the core housing.

6. The battery pack of claim 5, wherein the battery housing comprises one or more ribs aligned with the opening in the core housing.

7. The battery pack of claim 6, wherein the ribs press against the foam block.

8. A battery pack comprising:
a battery housing;
a core housing disposed within the battery housing;
at least one pouch cell disposed within the core housing;
a flexible circuit extending along an outer surface of the core housing;
a temperature sensor operably coupled to the flexible circuit; and
a copper trace operable coupled to the temperature sensor and extending into the core housing.

9. The battery pack of claim 8, wherein the copper trace extends into a location between two adjacent pouch cells.

10. A battery pack comprising:
a battery housing having an upper battery housing portion and a lower battery housing portion;
a core housing disposed within the battery housing;
at least one pouch cell disposed within the core housing; and
wherein the core housing is made from a thermally conductive material.

11. The battery pack of claim 10, wherein a bottom of the core housing is a heat sink.

12. The battery pack of claim 10, wherein the core housing includes a lower plate and an upper plate connected thereto by a plurality of standoffs.

13. The battery pack of claim 10, wherein the core housing includes a plurality of slot pairs.

14. The battery pack of claim 13, wherein a plate is installed in aligned slot pairs.

15. The battery pack of claim 14, wherein the pouch cell is disposed on the plate.
